# EUROPÄISCHE PATENTSCHRIFT

(11) **EP 1 143 189 B1**
(45) Veröffentlichungstag und Bekanntmachung des Hinweises auf die Patenterteilung: **14.09.2005**
(21) Anmeldenummer: 01106902.8
(22) Anmeldetag: 20.03.2001
(51) Int. Cl.: F16L 59/02

(54) **Isolierungsanordnung für mit heissen Gasen durchströmte Schächte**
Insulating device for conduits conveying hot gases
Dispositif d'isolation pour conduites de transport de gaz chaud

(30) Priorität: 05.04.2000 DE 10016800
(43) Veröffentlichungstag der Anmeldung: 10.10.2001
(73) Patentinhaber: KAEFER Isoliertechnik GmbH & Co. KG, 28195 Bremen (DE)
(72) Erfinder: Marwege, Hennig, Dr., 28357 Bremen (DE); Nordholt, Jörg, 28719 Bremen (DE); Navarro, Marcial, 28205 Bremen (DE); Wermuth, Ernst, 28279 Bremen (DE); Tonne, Stephan, 28279 Bremen (DE); Haider, Josef, 28201 Bremen (DE); Heuermann, Thomas, 27777 Ganderkesse (DE); Naumann, Uwe, 28329 Bremen (DE)
(74) Vertreter: von Ahsen, Erwin-Detlef

(56) Entgegenhaltungen:
- DE-A- 3 940 381
- DE-A- 19 631 291

## Beschreibung

Die Erfindung betrifft eine Isolierungsanordnung für mit heißen Gasen durchströmte Schächte, insbesondere Abgasschächte von Gasturbinen mit einer Isolierlage sowie eine die Isolierlage haltende und gegen den Gasstrom abdeckende, flächige Abdeckung, wobei die Abdeckung durch Tragschienen geführt ist.

Derartige Isolieranordnungen werden im Diffusor- und Kaminbereich von Gasturbinen eingesetzt. In diesen Bereichen werden die Isolieranordnungen durch Gase mit hoher Temperatur oberhalb von 400° C beaufschlagt. Im Diffusorbereich der Gasturbine kommt eine hohe Strömungsgeschwindigkeit oberhalb 30m/s hinzu. Hierdurch treten erhebliche thermische und dynamische Belastungen an der Isolieranordnung, insbesondere an deren Haltesystemen, der Abdeckung, der Tragschienen, Befestigungsstegen (Abstandhalter) zum Befestigen der Tragschiene an einer Schachtwand usw., auf.

Die Abdeckung, die Tragschienen und sonstige Befestigungsteile der Isolierungsanordnung sind in der Regel hinsichtlich der auftretenden Temperaturen aus temperaturfestem Metall hergestellt. Dieses gilt auch für die Abstandhalter, durch die die Tragschienen an der Schachtwand befestigt sind. Die Abstandhalter bilden somit Wärmebrücken, durch die Wärme vom Abgasstrom der Gasturbine in die Schachtwand transportiert werden kann, da Abstandhalter aus Metall gute Wärmeleiter sind. Es kommt deshalb darauf an, möglichst wenig Abstandhalter zu verwenden. Dieses Ziel wird grundsätzlich bereits durch die Verwendung von Tragschienen, an denen die Abdeckung zum Halten der Isolierlage befestigt sind, erreicht. Die Tragschienen weisen eine ausreichende Eigensteifigkeit auf, um die Abdeckung sicher zu halten. Gleichzeitig müssen die Tragschienen und die Abdeckung eine ausreichende Bewegungsmöglichkeit bei dennoch sicherem Halt haben, um auch große Temperaturschwankungen durch Wärmedehnung und dynamische Belastungen ausgleichen zu können.

Bei aus der Praxis bekannten Isolieranordnungen in dieser Art, wie in der Druckschrift DE-A-196 31 291 veröffentlicht, wird dieses dadurch gewährleistet, daß die Tragschienen mit einem gewissen Spiel in Längsrichtung der Tragschienen gesehen mit den Abstandhaltern verbunden sind. Darüber hinaus ist es bekannt, Abstandhalter aus einem Flachstahl herzustellen, wobei der Flachstahl in einer Ebene quer zur Längsachse der Tragschienen angeordnet ist. Axialdehnungen in der Tragschiene können so durch Biegung des Flachstahls ausgeglichen werden. Bei diesen Systemen treten aber immer noch erhebliche Belastungen, insbesondere Biegebelastungen auf die Abstandhalter auf, so daß immer noch eine hohe Anzahl von Abstandhaltern erforderlich ist. Darüber hinaus weisen die bekannten Systeme den Nachteil auf, daß mit ihnen ein erheblicher Fertigungsaufwand bei nur niedrigem Vorfertigungsgrad verbunden ist. Die bekannten Systeme müssen fast vollständig auf der Baustelle montiert werden.

Hiervon ausgehend liegt der Erfindung das Problem zugrunde, eine Isolierungsanordnung der eingangs genannten Art derart weiterzubilden, daß die Zahl der Abstandhalter, durch die die Tragschienen an der Schachtwand befestigt werden, minimiert ist und die mit einem hohen Vorfertigungsgrad in der Werkstatt und mit niedrigem Montageaufwand auf der Baustelle hergestellt werden kann.

Zur Lösung dieses Problems ist die erfindungsgemäße Isolierungsanordnung dadurch gekennzeichnet, daß die Tragschienen mit einem Festlager und wenigstens einem Loslager an einer Schachtwand befestigt sind.

Durch die erfindungsgemäße Isolierungsanordnung ist die Tragschiene an wenigstens einem Punkt fixiert, während sie an den übrigen, als Loslager ausgebildeten Befestigungspunkten, in ihrer Längsrichtung frei beweglich ist. Jede Tragschiene ist somit bei jeder Temperatur und somit bei jedem Maß der Wärmedehnung statisch bestimmt gelagert. Biegebeanspruchungen auf die Abstandhalter können nicht auftreten, so daß mit einem Minimum an Abstandhaltern gearbeitet werden kann. Je nach Länge der Tragschienen reicht sogar ein Festlager und ein Loslager aus. Diese können fast vollständig in der Werkstatt vorgefertigt und sodann auf der Baustelle endmontiert werden.

Besonders günstig ist es, wenn die Tragschiene mit einem etwa mittigen Festlager und zwei äußeren Loslagern an der Schachtwand befestigt ist. Die Tragschiene wird etwa mittig fixiert und kann sich in beide Richtungen infolge Wärmedehnung frei ausdehnen. Bei längeren Tragschienen können selbstverständlich auch zu beiden Seiten mehrere Loslager vorgesehen sein.

Die Abdeckung ist nach einer Weiterbildung der Erfindung kraftschlüssig, insbesondere mittels Klemmleisten mit den Tragschienen verbunden. Auch die Abdeckung kann sich so bei Temperaturschwankungen frei ausdehnen, ohne daß es zu unzulässigen Wärmespannungen kommt. Besonders günstig ist es, wenn die Abdeckung ihrerseits in einem Bereich, vorzugsweise im Bereich der Festlager der Tragschienen, mit der Tragschiene formschlüssig verbunden ist. Dieses geschieht nach einer konstruktiven Ausgestaltung der Erfindung durch Vorsehen einer Kerbe in der Tragschiene im Bereich des Festlagers, in die ein Vorsprung an der Abdeckung formschlüssig eingreift.

Weitere Merkmale der Erfindung beziehen sich auf konstruktive Einzelheiten des Loslagers und auf die Befestigung der Abdeckung an den Tragschienen.

Die Erfindung wird nachfolgend anhand von Ausführungsbeispielen unter Bezugnahme auf die Zeichnungen näher erläutert. Es zeigen:
- Fig. 1: ein erstes Ausführungsbeispiel einer Isolierungsanordnung mit den Erfindungsmerkmalen in perspektivischer Draufsicht,
- Fig. 2: einen Vertikalschnitt durch die Isolierungsanordnung gemäß Fig. 1 in der Ebene II-II,
- Fig. 3: einen Vertikalschnitt durch die Isolierungsanordnung gemäß Fig. 1 in der Ebene III-III,
- Fig. 4: eine perspektivische Darstellung eines Festlagerbereichs der Isolierungsanordnung gemäß Fig. 1 in teilmontiertem Zustand,
- Fig. 5: eine perspektivische Darstellung eines Loslagerbereichs der Isolierungsanordnung gemäß Fig. 1 in teilmontiertem Zustand,
- Fig. 5a: eine perspektivische Darstellung des Loslagerbereichs der Isolieranordnung gemäß Fig. 1 in einer Abwandlung zu Fig. 5,
- Fig. 6: ein weiteres Ausführungsbeispiel einer Isolierungsanordnung mit den Erfindungsmerkmalen in perspektivischer Draufsicht,
- Fig. 7: einen Vertikalschnitt durch Isolierungsanordnung gemäß Fig. 6 in einer Ebene VII-VII,
- Fig. 8: einen Vertikalschnitt durch die Isolierungsanordnung gemäß Fig. 6 in einer Ebene VIII-VIII,
- Fig. 9: eine perspektivische Darstellung eines Festlagerbereichs der Isolierungsanordnung gemäß Fig. 6 in teilmontiertem Zustand,
- Fig. 10: eine perspektivische Darstellung eines Loslagerbereichs der Isolierungsanordnung gemäß Fig. 6 in teilmontiertem Zustand,
- Fig. 11: eine Seitenansicht einer weiteren Variante des Loslagerbereichs und des Festlagerbereichs der Isolieranordnung gemäß Fig. 1,
- Fig. 12: einen Horizontalschnitt durch den Loslagerbereich gemäß Fig. 11,
- Fig. 13: einen Horizontalschnitt durch den Festlagerbereich gemäß Fig. 11.

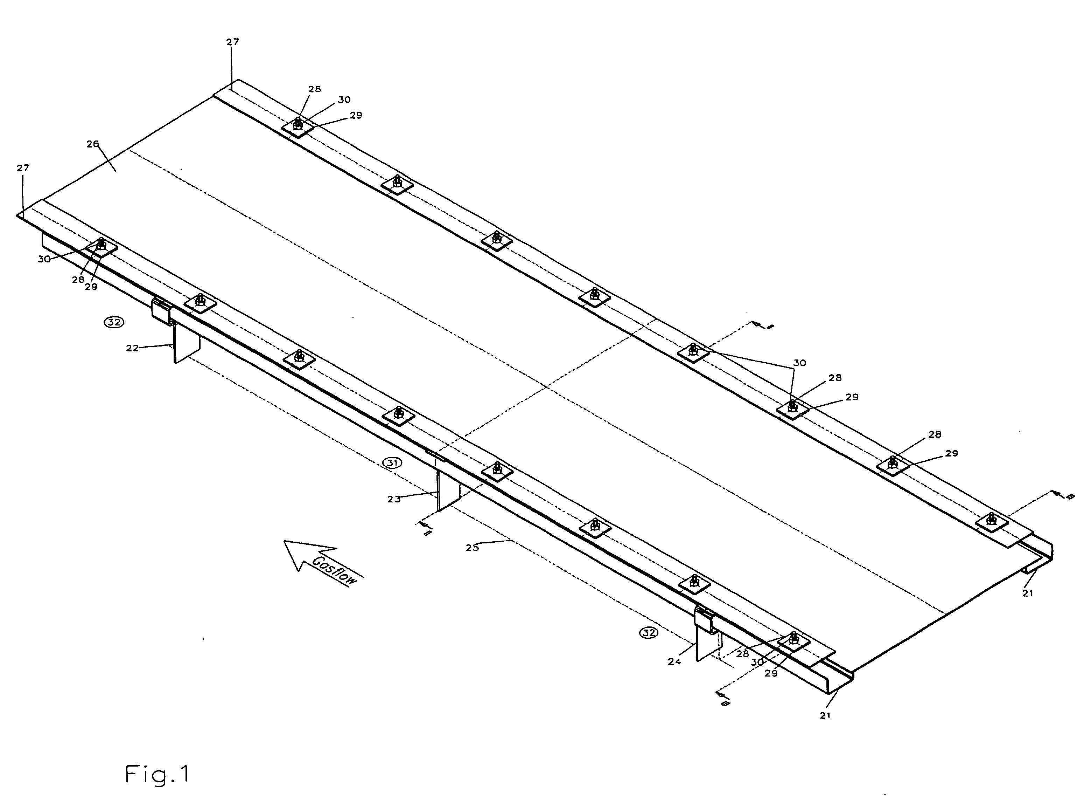

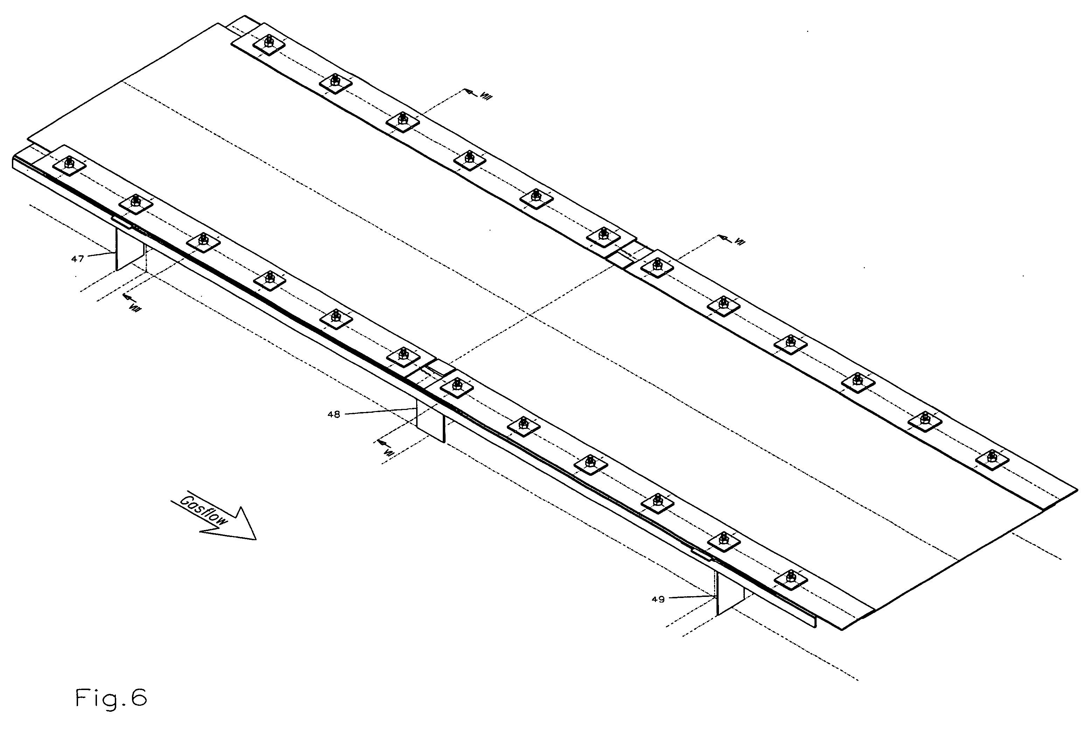

Die in den Fig. 1 bis 10 dargestellten Ausführungsbeispiele einer Isolierungsanordnung werden vor allem in Abgasschächten für Gasturbinen eingesetzt. Das in den Fig. 1 bis 5 dargestellte Ausführungsbeispiel der Isolierungsanordnung wird insbesondere im Bereich höherer Drücke und Druckschwankungen eines solchen Abgasschachtes und wegen der hier auftretenden hohen Strömungsgeschwindigkeiten des Abgases von über 30m/s eingesetzt, während das in den Fig. 6 bis 10 dargestellte Ausführungsbeispiel vorzugsweise im Kaminbereich verwendet wird.

Die Fig. 1 und 6 zeigen jeweils nur eine "Bahn" einer Isolieranordnung. Die komplette Isolierungsanordnung besteht jeweils aus mehreren, voreinander und nebeneinander angeordneten Bahnen.

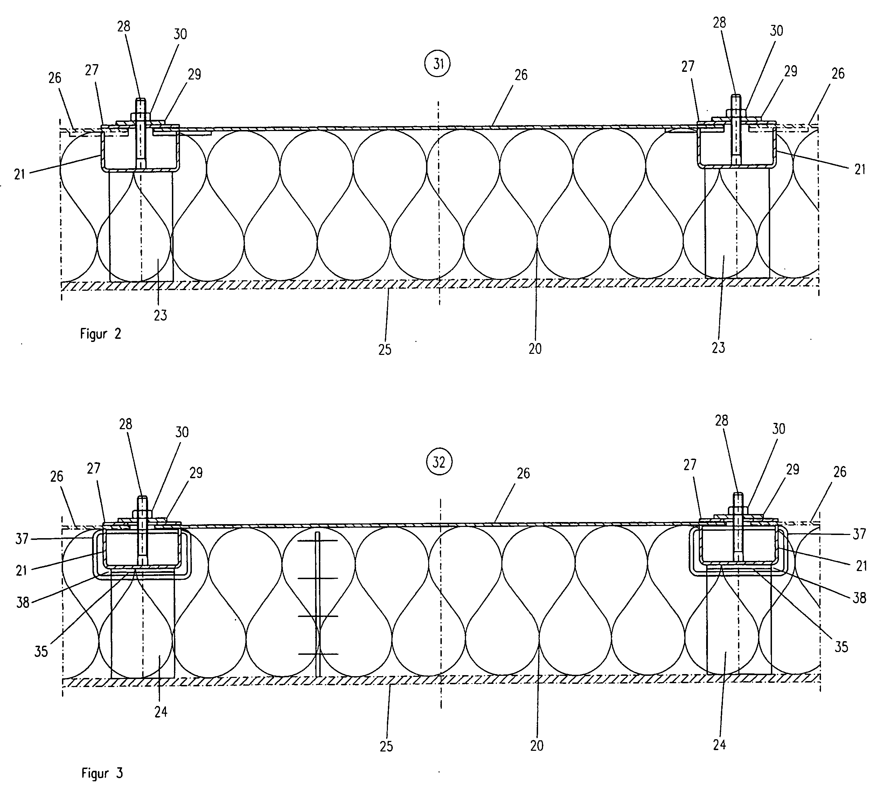

Fig. 1 zeigt einen Ausschnitt, nämlich eine "Bahn" einer Isolieranordnung, bei der die eigentliche Isolierlage 20 (vergl. Fig. 2, 3) aus Gründen der besseren Übersichtlichkeit weggelassen ist. Tragschienen 21 sind im vorliegenden Fall über drei Abstandhalter 22, 23, 24 an einer Schachtwand 25 befestigt.

Zum Halten und Abdecken der Isolierung 20 dient eine im wesentlichen ebene, gegebenenfalls aber auch gekrümmt ausgebildete Abdeckung 26. Die Abdeckung 26 liegt mit ihren beiden Längsseitenrändern auf zwei benachbarten Tragschienen 21 auf und wird durch Klemmleisten 27 gehalten. Die Abdeckung 26 wird durch diese Konstruktion "schwimmend" zwischen der Tragschiene 21 und der Klemmleiste 27 gehalten. Das bedeutet, daß sich die Abdeckung 26 infolge von Wärmedehnungen frei gegenüber den Tragschienen 21 bewegen kann, so daß innerhalb der Abdeckung 26 keine oder zumindest keine nennenswerten, eventuell zu Verwerfungen der Abdeckung 26 führenden Spannungen auftreten können. Die Tragschiene 21 ist zu diesem Zweck im Querschnitt U-förmig mit einem nach oben offenen U ausgebildet. Die Abdeckungen 26 liegen auf den freien Schenkeln der U-förmigen Tragschiene 21 auf, so daß sich zwischen den Abdeckungen 26 und der Tragschiene 21 eine Linienberührung mit minimaler Reibkraft ergibt.

Die Klemmleisten 27 können sich gegebenenfalls mit den Abdeckungen 26 infolge deren Wärmedehnung, aber auch zum Ausgleich ihrer eigenen Wärmedehnung, gegenüber den Tragschienen verschieben. Dieses ist wie folgt gelöst:

An der U-förmigen Tragschiene 21 sind Stehbolzen 28 aufgeschweißt. Die Stehbolzen 28 sind zwischen zwei benachbarten Abdeckungen 26 hindurchgeführt. Der Abstand zwischen den beiden benachbarten Abdeckungen 26 und von den Abdeckungen 26 zum Stehbolzen 28 ist dabei so gewählt, daß sich die Abdeckungen 26 im zu erwartenden Temperaturbereich frei ausdehnen können. Dieser Abstand kann mit Hilfe des Wärmeausdehungskoeffizienten des Materials für die Abdeckungen 26 berechnet oder experimentell ermittelt werden. Der Stehbolzen 28 ist sodann durch eine Bohrung in die auf den beiden benachbarten Abdeckungen 26 aufgelegte Klemmleiste 27 hindurch geführt. Eine der Bohrungen in der Klemmleiste 27 entspricht dabei dem Durchmesser des Stehbolzens 28, während die übrigen Bohrungen in der Klemmleiste 27 so groß sind, daß sie eine freie Wärmedehnung der Klemmleiste 27 erlauben, ohne daß es zu unzulässigen, zu Verwerfungen in der Klemmleiste 27 führenden Spannungen kommt. Selbstverständlich können hier, anstatt einer runden Bohrung, auch Langlöcher mit ausreichender Länge in der Klemmleiste 27 vorgesehen sein. Aus fertigungstechnischen Gründen ist es aber kostengünstiger, einfache Rundlöcher zu stanzen oder zu bohren. Der Durchmesser der Löcher in der Klemmleiste 27 ist dabei wieder entsprechend des Wärmeausdehnungskoeffizienten für das Material der Klemmleiste 27 berechnet oder experimentell ermittelt. Die Bohrungen in der Klemmleiste 27 werden sodann mit Unterlegscheiben 29, die im vorliegenden Fall quadratisch ausgebildet sind, abgedeckt und die Klemmleiste 27 mitsamt der Unterlegscheibe 29 und den Abdeckungen 26 mittels einer, beispielsweise selbstsichernden, Mutter 30 verschraubt.

Im Bereich des Abstandhalters 23 ist der Abstandhalter 23 mit der Tragschiene 21 einerseits und die Tragschiene 21 mit der Abdeckung 26 andererseits derart verbunden, daß die Abdeckung 26 in Längsrichtung der Tragschienen 21 gesehen als Festlager 31 gelagert ist. Im Bereich der äußeren Abstandhalter 22, 24 erfolgt die Lagerung der Tragschiene 21 nach Art eines Loslagers 32. Auch die Tragschiene 21 kann sich somit infolge Temperaturschwankungen frei ausdehnen, ohne daß es zu Wärmespannungen, zumindest nicht in unzulässiger Höhe, kommt.

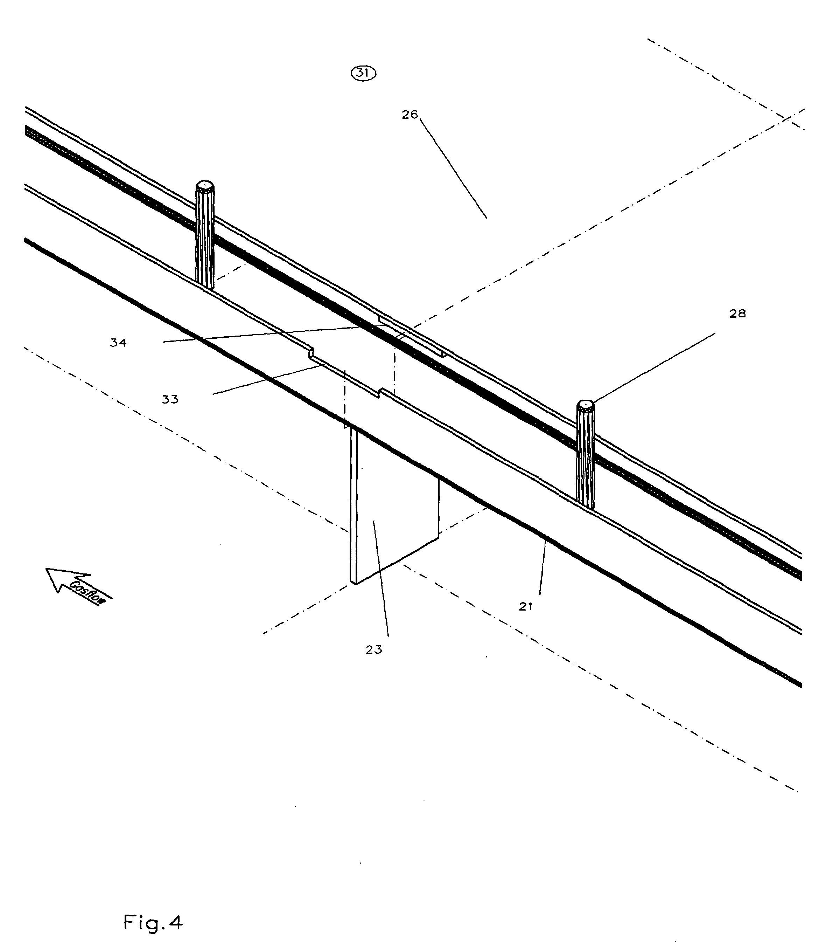

Das Festlager 31 ist wie in Fig. 2 und 4 gezeigt ausgebildet:

Der Abstandhalter 23 ist zum einen mit der Schachtwandung 25 und zum anderen mit der Tragschiene 21 fest verbunden, nämlich verschweißt. Die Tragschiene 21 ist somit in diesem Bereich fest gelagert. An ihrer Oberseite weist die Tragschiene 21 in ihren beiden freien Schenkeln Kerben 33 auf. An der Unterseite der Abdeckung 26 ist zumindest im Bereich des Längsrandes der Abdeckung 26 eine Führungslasche 34 angebracht, nämlich im vorliegenden Fall angeschweißt. Diese greift in die zugehörige Kerbe 33 formschlüssig ein. Die Abdeckung 26 ist hierdurch in Längsrichtung der Tragschiene 21 eindeutig gelagert; kann sich aber quer zur Längsrichtung der Tragschiene 21 frei ausdehnen. Die Kerben 33 sind im vorliegenden Fall stets genau oberhalb der das Festlager 31 bildenden Abstandhalter 23 angeordnet. Das Festlager 31 ist genau mittig der Tragschiene 21 bzw. der Abdeckung 26 angeordnet, so daß sich gleich große absolute Maße für die Wärmeausdehnung an den freien Enden der Tragschienen 21 und der Abdeckung 26 ergeben. Es ist aber unmittelbar einsichtig, daß das Loslager 31 auch zur Mitte versetzt oder gar an den Randbereichen der Tragschienen 21 bzw. der Abdeckung 26 angeordnet sein kann. Die Kerben 33 und der Abstandhalter 23 können auch zueinander versetzt angeordnet sein.

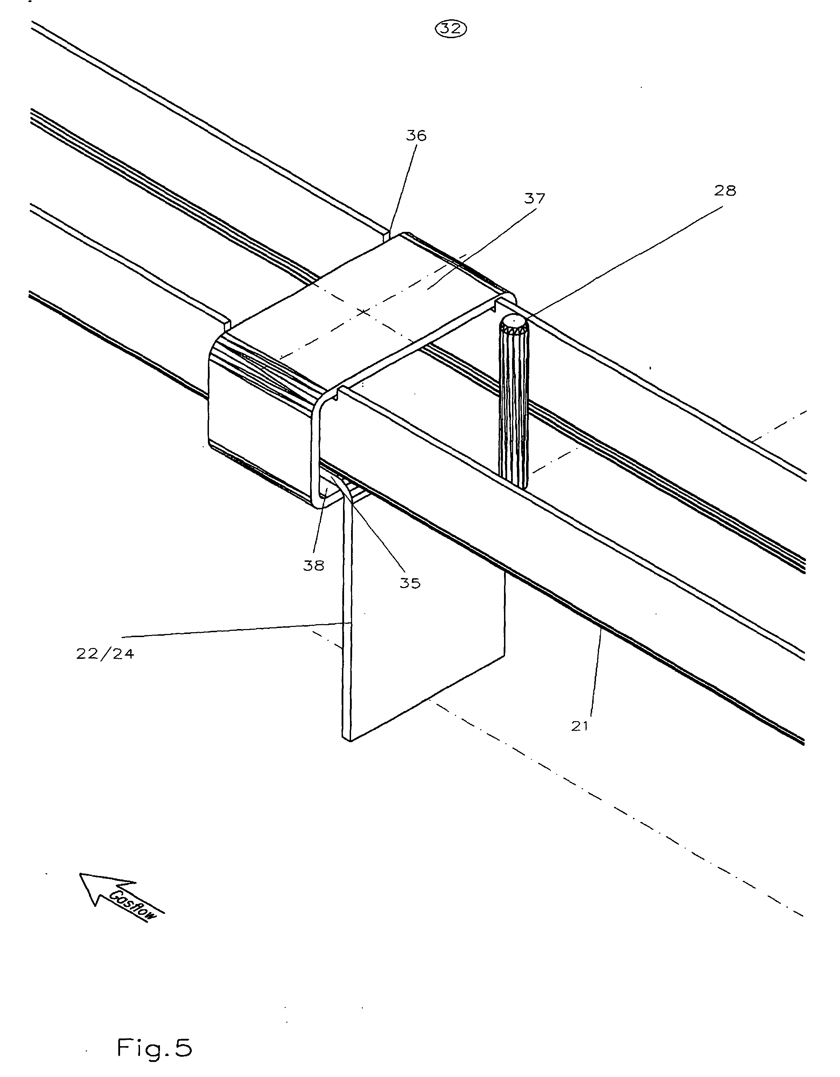

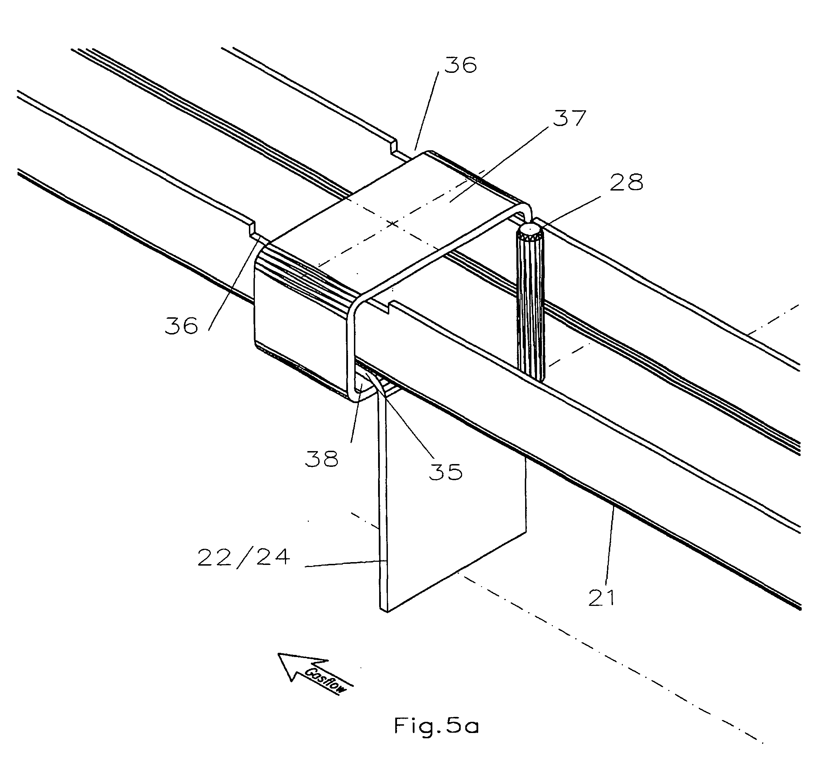

Das Loslager 32 ist in den Fig. 3 und 5 näher gezeigt:

Wie bereits erwähnt, liegt die Abdeckung 26 außerhalb des Bereichs des Festlagers 31 frei auf den freien Schenkeln der Tragschiene 21 auf und wird hier lediglich durch Klemmung gehalten, so daß sich die Abdeckung 26 in diesem Bereich frei ausdehnen kann (schwimmende Lagerung). Das Loslager 32 für die Tragschiene 21 ist wie folgt gebildet: Die Abstandhalter 22, 24 sind wiederum mit der Schachtwandung 25 verschweißt. An ihrem gegenüberliegenden Ende sind die Abstandhalter 22, 24 L-förmig abgekantet, so daß der abgekantete Schenkel 35 der Abstandhalter 22, 24 an der Unterseite der Tragschiene 21 anliegt. An der Oberseite der Tragschiene 21 sind in deren freien Schenkeln Kerben 36 angebracht. In diese Kerbe greift ein etwa rechteckförmiger Ring 37 ein, der um die Tragschiene 21 herumgeführt ist. Zwischen dem Ring 37 und der Unterseite der Tragschiene 21 ergibt sich ein Spalt 38, in den der abgekantete Schenkel 35 des Abstandhalters 23 bzw. 24 mit einem gewissen Spiel eingreift. Der Ring 37 kann sich somit zusammen mit der Tragschiene 21 in Längsrichtung der Tragschiene 21 gegenüber dem Abstandhalter 22, 24 frei bewegen. Der Ring 37 ist so ausgebildet, daß er genau formschlüssig in die Kerben 36 paßt.

Selbstverständlich sind für das Loslager 32 Alternativen denkbar. So kann zum Beispiels der Abstandhalter 22, 24 mit dem Ring 37 verschweißt und die Kerben 36 so lang ausgebildet sein, daß der Ring 37 mit dem erforderlichen Spiel in Längsrichtung der Tragschiene 21 verschoben werden kann. Diese Variante ist in Fig. 5a gezeigt.

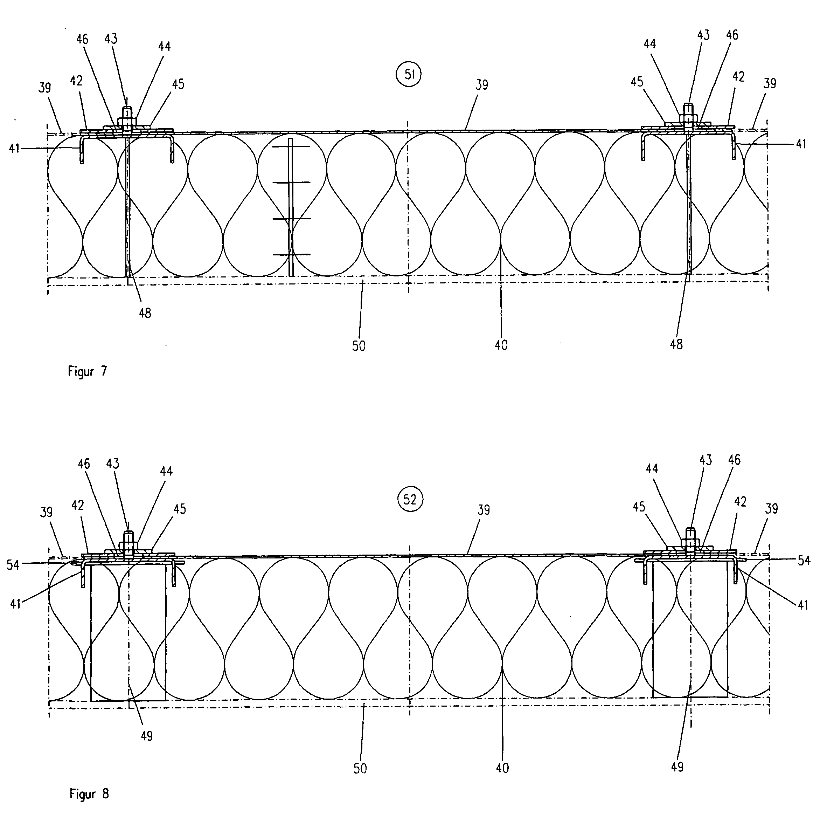

In den Fig. 6 bis 10 ist ein alternatives Ausführungsbeispiel der Erfindung gezeigt, daß insbesondere für nicht durch sehr hohe Strömungsgeschwindigkeiten beanspruchte Teile der Abgasführung einer Gasturbine, nämlich den Kamin, geeignet ist. Abdeckungen 39 für eine Isolierlage 40 sind auf U-förmigen Tragschienen 41 gelagert. Die Tragschienen 41 sind aber im vorliegenden Fall als im Querschnitt nach unten offenes U ausgebildet, so daß die Abdeckung 39 im Bereich ihrer Längsränder flächig auf zwei benachbarten Tragschienen 41 aufliegt. Abdeckung 39 wird durch Klemmleisten 42 kraftschlüssig gehalten. Die Klemmleisten 42 sind, wie auch im zuvor beschriebenen Ausführungsbeispiel, mittels Stehbolzen 43 und einer, beispielsweise selbstsichernden, Mutter 44 und Unterlegscheiben 45 gehalten. Wie in den Fig. 7 und 8 gut zu erkennen ist, sind die Längsseitenränder der Abdeckung 39 wiederum soweit voneinander und von den Stehbolzen 43 entfernt, daß sich die Abdeckungen 39 seitlich frei ausdehnen können. Anders als im zuvor genannten Ausführungsbeispiel sind, wie ebenfalls in Fig. 7 und 8 angedeutet, sämtliche Bohrungen 46 in den Klemmleisten 42, durch die die Stehbolzen 43 hindurchgeführt sind, mit wesentlich größerem Durchmesser als mit dem Durchmesser der Stehbolzen 43 ausgebildet.

Die Tragschienen 41 sind durch Abstandhalter 47, 48, 49 an der Schachtwand 50 befestigt. Der Bereich des mittleren Abstandhalters 48 ist wiederum als Festlager 51 ausgebildet, während der Bereich der äußeren Abstandhalter 47, 49 als Loslager 52 ausgebildet sind.

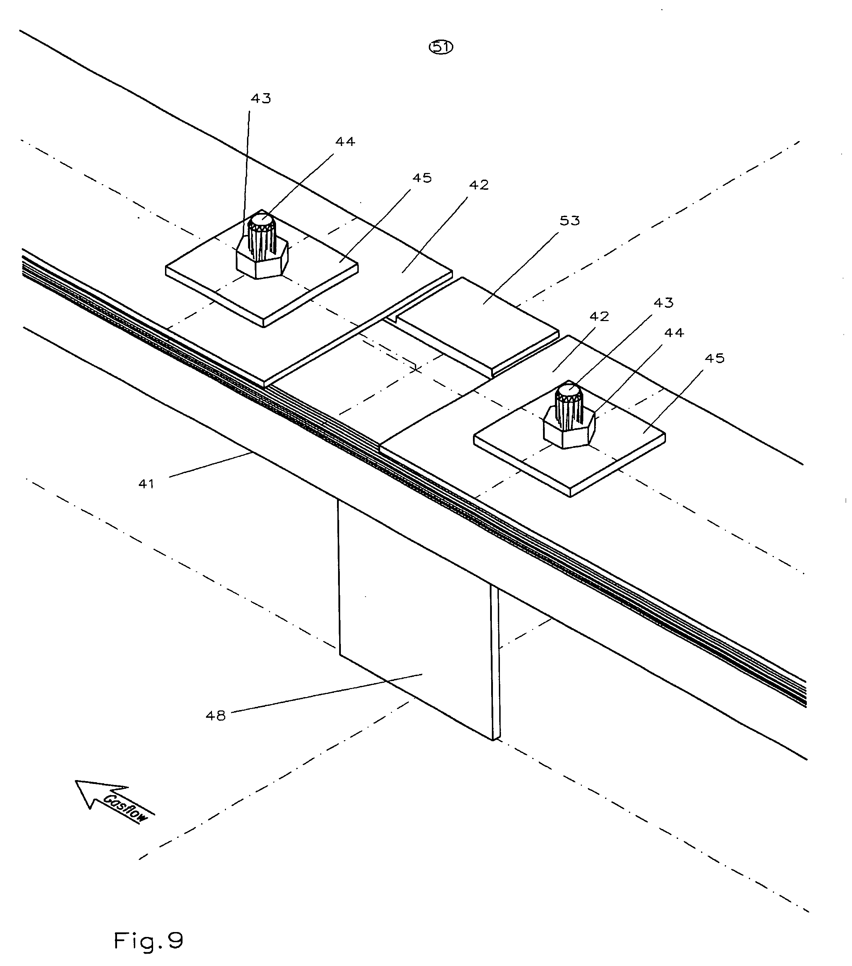

Das Festlager ist in den Fig. 7 und 9 näher gezeigt.

Der Abstandhalter 48 ist hier in einer Ebene entsprechend der Längsrichtung der Tragschienen 41 angeordnet und fest mit der Schachtwandung 50 einerseits und der Tragschiene 41 andererseits verbunden, nämlich verschweißt. Die Abdeckung 39 weist mittig im Bereich ihres Längsseitenrands eine Führungslasche 53 auf. Diese ist im vorliegenden Fall aber an der Oberseite, also an der der Strömung zugewandten Seite der Abdeckung 39 angebracht. Jeder Tragschiene 41 zwei Klemmleisten 42 zugeordnet. Wie in Fig. 9 gut zu erkennen ist, ist die Führungslasche 53 formschlüssig zwischen den beiden Klemmleisten 42 gehalten. Die Abdeckung 39 ist somit in ihrem mittleren Bereich in Längsrichtung der Tragschienen 41 gesehen wiederum nach Art eines Festlagers gelagert.

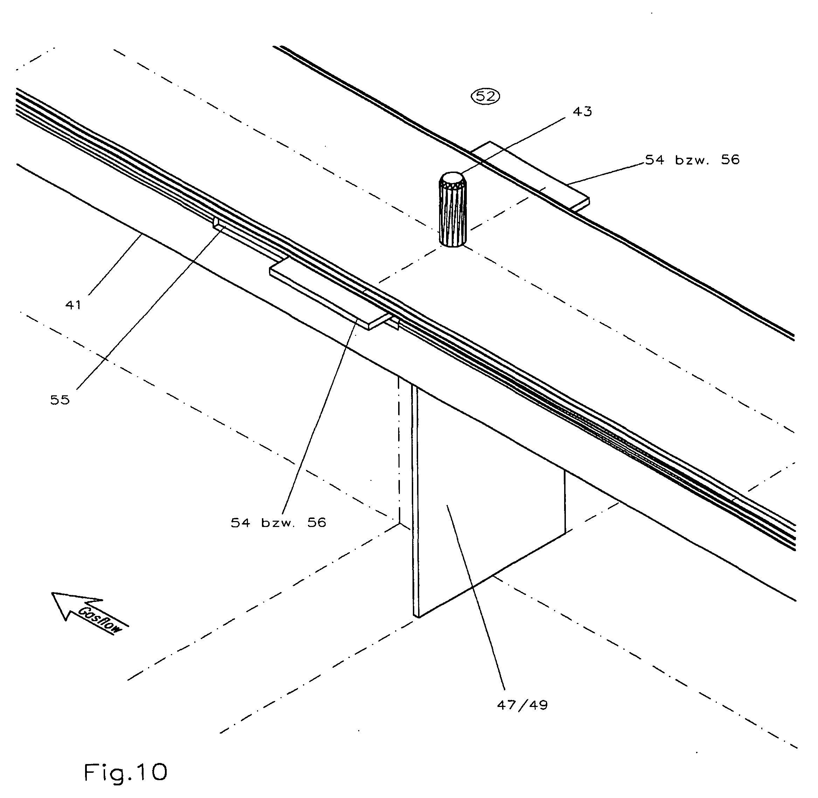

Der Bereich des Loslagers 52 ist in den Fig. 8 und 10 näher gezeigt.

Wie schon im zuvor genannten Ausführungsbeispiel liegt die Abdeckung 39 hier frei auf den Tragschienen 41 auf und wird durch die Klemmleiste 42 gehalten, so daß nach Überwindung der Reibkräfte sich die Abdeckung 39 frei ausdehnen kann (schwimmende Lagerung). Die Abstandhalter 47, 49 sind wiederum auf die Schachtwand 50 aufgeschweißt, wobei sich die Ebene der Abstandhalter 47, 49 quer zur Längsrichtung der Tragschienen 41 erstreckt. Die Abstandhalter 47, 49 werden zunächst als T-förmige Bleche ausgestanzt oder ausgeschnitten. Der obere Querschenkel 54 der Abstandhalter 47, 49 wird sodann um 90° abgekantet, wie dieses in Fig. 10 gut zu erkennen ist. Der Querschenkel 54 bildet so zwei seitliche Flügel 56. In den Tragschienen 41 ist links und rechts je ein Schlitz 55 angeordnet, in die der Querschenkel 54 mit den Flügeln 56 eingreift. Die Abstandhalter 47, 49 werden dabei zunächst um 90° verdreht in das nach unten offen U der Tragschiene 41 eingesetzt und sodann wieder um 90° in die in den Fig. 8 und 10 gezeigte Position zurückgedreht, wobei die Querschenkel 54 in die Schlitze 55 hineingedreht werden. Die Schlitze 55 sind so lang ausgebildet, daß sich die Tragschiene 41 infolge Wärmedehnung frei auf den Abstandhaltern 47, 49 bewegen kann.

Auch beim zuletzt erläuterten Ausführungsbeispiel ist die Führungslasche 53 der Abdeckung 39 oberhalb des das Festlager 51 bildenden Abstandhalters 48 angeordnet. Selbstverständlich können auch im vorliegenden Fall Festlager 51 für die Tragschiene 41 und Führungslasche 53 zueinander versetzt angeordnet sein. Das Festlager 51 muß auch nicht notwendigerweise genau mittig zur Tragschiene 41 vorgesehen werden. Vielmehr kann das Festlager 51 auch am Endbereich der Tragschiene 41 vorgesehen sein.

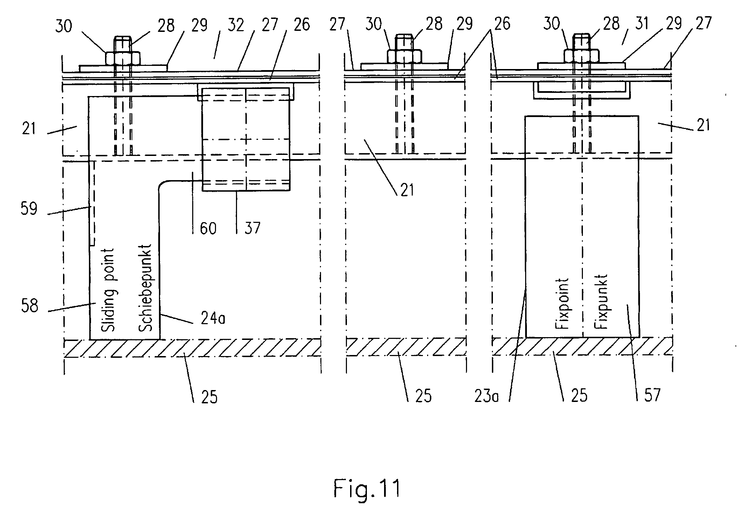

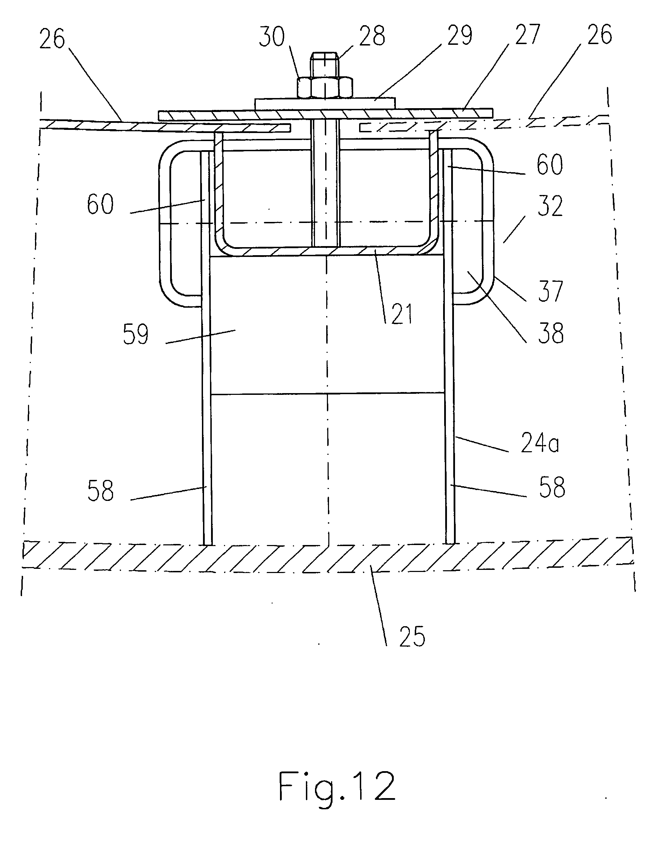

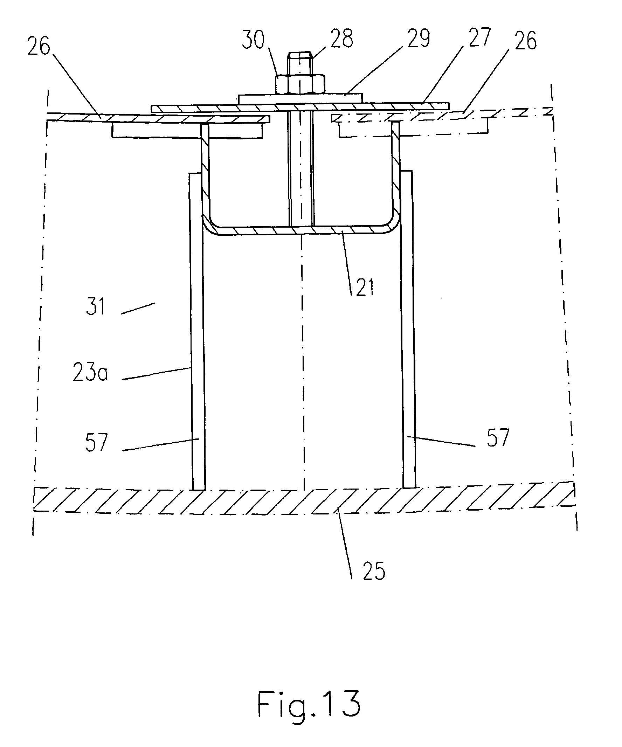

Zu den in den Fig. 1 bis 5a gezeigten Ausführungsformen für das Festlager 31 und das Loslager 32 sind weitere Varianten denkbar, die in den Figuren 11 bis 13 dargestellt sind. In den Fig. 11 bis 13 ist gleiches mit denselben Bezugsziffern, wie in den Fig. 1 bis 5a bezeichnet. Jedoch sind die Abstandhalter 23a für das Festlager 31 und die Abstandhalter 24a für das Loslager 32 hier abweichend ausgebildet. Der Abstandhalter 23a für das Festlager 31 ist mit zwei seitlich zur Tragschiene 21 angeordneten plattenförmigen Beinen 57 ausgebildet, die einerseits mit der Tragschiene 21 und andererseits mit der Schachtwand 25 fest verbunden, nämlich verschweißt, sind. Die plattenförmigen Beinen erstrecken sich dabei parallel zur Längsmittelebene der Tragschienen 21.

Analog weist auch der Abstandhalter 24a für das Loslager 32 plattenartige aufrechte Beine 58 auf, die wiederum zu beiden Seiten der Tragschiene 21 angeordnet sind und sich in einer zur Längsmittelebene der Tragschiene 21 parallelen Ebene erstrecken. Der Steg 59 ist dabei unterhalb der Tragschiene 21 angeordnet und erstreckt sich quer zur Längsmittelebene der Tragschiene 21. In der Seitenansicht (Fig. 11) sind die Beine 58 L-förmig ausgebildet. Definiert man die Schachtwand 25 als "unten", so bilden die Beine 58 ein auf den Kopf stehendes L. Ferner sind die Beine 58 mit einem ebenfalls plattenartigen Steg 59 verbunden. Mit ihrem waagerechten Schenkel 60 greifen die Beine 58 jeweils in einen Spalt 38, der zum einen durch den Ring 37 und zum anderen durch die Tragschiene 21 definiert und jeweils links bzw. rechts zur Tragschiene 21 angeordnet ist. Die Schenkel 60 sind somit links und rechts neben der Tragschiene 21 angeordnet und nicht mehr, wie in der Variante gemäß Fig. 5, unter der Tragschiene 21.

### Bezugszeichenliste:

- 20: Isolierlage
- 21: Tragschiene
- 22: Abstandhalter
- 23: Abstandhalter
- 24: Abstandhalter
- 25: Schachtwand
- 26: Abdeckung
- 27: Klemmleiste
- 28: Stehbolzen
- 29: Unterlegscheibe
- 30: Mutter
- 31: Festlager
- 32: Loslager
- 33: Kerbe
- 34: Führungslasche
- 35: Schenkel
- 36: Kerbe
- 37: Ring
- 38: Spalt
- 39: Abdeckung
- 40: Isolierlage
- 41: Tragschiene
- 42: Klemmleiste
- 43: Stehbolzen
- 44: Mutter
- 45: Unterlegscheibe
- 46: Bohrung
- 47: Abstandhalter
- 48: Abstandhalter
- 49: Abstandhalter
- 50: Schachtwand
- 51: Festlager
- 52: Loslager
- 53: Führungslasche
- 54: Querschenkel
- 55: Schlitz
- 56: Flügel
- 57: Bein
- 58: Bein
- 59: Steg
- 60: Schenkel

## Patentansprüche

1. Isolierungsanordnung für mit heißen Gasen durchströmte Schächte, insbesondere Abgasschächte von Gasturbinen, mit einer Isolierlage (20, 40) sowie einer die Isolierlage (20, 40) haltende und gegen den Gasstrom abdeckende, flächige Abdeckung (26, 39), wobei die Abdeckung (26, 39) durch Tragschienen (21, 41) geführt ist, **dadurch gekennzeichnet, daß** die Tragschienen (21, 41) mit einem Festlager (31, 51) und wenigstens einem Loslager (32, 52) an einer Schachtwand (25, 50) zu befestigen sind.

2. Isolierungsanordnung nach Anspruch 1, **dadurch gekennzeichnet, daß** die Tragschienen (21, 41) mit einem mittigen Festlager (31, 51) und wenigstens einem Loslager (32, 52) zu beiden Seiten des Festlagers (31, 52) an der Schachtwand (25, 50) befestigt sind.

3. Isolierungsanordnung nach Anspruch 1 oder 2, **dadurch gekennzeichnet, daß** das Festlager (31, 51) für die Tragschiene (21, 41) durch einen Abstandhalter (23, 48), der einerseits mit der Tragschiene (21, 41) und anderseits mit der Schachtwand (25, 50) fest verbunden, insbesondere verschweißt, ist, gebildet ist.

4. Isolierungsanordnung nach einem der Ansprüche 1 bis 3, **dadurch gekennzeichnet, daß** das Loslager (32, 52) durch einen gegenüber der Tragschiene (21, 41) verschieblichen Abstandhalter (22, 24; 47, 49) gebildet ist.

5. Isolierungsanordnung nach Anspruch 4, **dadurch gekennzeichnet, daß** der Abstandhalter (22, 24) mit einem Schenkel (35) in einen Schlitz (38) zwischen der Tragschiene (21) und einem in Längsrichtung der Tragschiene (21) festgelegten Ring (37) eingreift.

6. Isolierungsanordnung nach Anspruch 4, **dadurch gekennzeichnet, daß** der Abstandhalter (22, 24) fest mit einem verschieblich gegenüber der Tragschiene (21) gelagerten Ring verbunden ist.

7. Isolierungsanordnung nach Anspruch 4, **dadurch gekennzeichnet, daß** der Abstandhalter (47, 49) mit Flügeln (56) jeweils längsverschiebbar in Schlitze (55) an der Tragschiene (41) eingreift.

8. Isolierungsanordnung nach einem der Ansprüche 1 bis 7, **dadurch gekennzeichnet, daß** die Abdeckung (26, 39) und die Tragschienen (21, 41) in einem bestimmten Bereich, insbesondere im Bereich der Festlager (31, 51) formschlüssig, im übrigen aber kraftschlüssig, insbesondere mittels Klemmleisten (27, 42), miteinander verbunden sind.

9. Isolierungsanordnung nach Anspruch 8, **dadurch gekennzeichnet, daß** an der Abdeckung (26, 39) eine Führungslasche (34, 53) angeordnet ist, durch die die Abdeckung (26, 39) gegenüber der Tragschiene (21, 41) und/oder Klemmleisten (27, 42) in Längsrichtung der Tragschiene (21, 41) gesehen formschlüssig gehalten ist, sich in Querrichtung zur Tragschiene (21, 41) aber frei ausdehnen kann.

10. Isolierungsanordnung nach Anspruch 9, **dadurch gekennzeichnet, daß** die Tragschienen (21) eine Kerbe (33) aufweisen, in die die Führungslasche (34) formschlüssig eingreift, oder daß die Führungslasche (53) formschlüssig zwischen zwei Klemmleisten (42) gehalten ist.

## Claims

1. Insulating system for shafts through which hot gases flow, in particularly exhaust gas shafts of gas turbines, including an insulating layer (20, 40) as well as an area-covering cover (26, 39) holding said insulating layer (20, 40) and covering same from the gas flow, wherein said cover (26, 39) is guided by and through supporting rails (21, 41), **characterised in that** said supporting rails (21, 41) are adapted for being fastened by one fixed support (31, 51) and at least one mobile support (32, 52) on a wall (25, 50) of the shaft.

2. Insulating system according to Claim 1, **characterised in that** said supporting rails (21, 41) are fastened by one central fixed support (31, 51) and at least one mobile support (32, 52) on both sides of said fixed support (31, 52) on said wall (25, 50) of the shaft.

3. Insulating system according to Claim 1 or 2, **characterised in that** said fixed support (31, 51) for said supporting rail (21, 41) is formed by a spacer (23, 48) that is fixedly connected, in particular welded, to said supporting rail (21, 41), on the one hand, and to said wall (25, 50) of the shaft, on the other hand.

4. Insulating system according to any of the Claims 1 to 3, **characterised in that** said mobile support (32, 52) is formed by a spacer (22, 24; 47, 49) adapted for sliding displacement relative to said supporting rail (21, 41).

5. Insulating system according to Claim 4, **characterised in that** said spacer (22, 24) engages by one leg (35) into a slot (38) between said supporting rail (21) and a ring (37) fixed along the longitudinal extension of said supporting rail (21).

6. Insulating system according to Claim 4, **characterised in that** said spacer (22, 24) is fixedly connected to a ring supported for sliding displacement relative to said supporting rail (1).

7. Insulating system according to Claim 4, **characterised in that** said spacer (47, 49) engages in respective slots (55) on said supporting rail (41) by respective wings (56).

8. Insulating system according to any of the Claims 1 to 7, **characterised in that** said cover (26, 39) and said supporting rails (21, 41) are connected to each other in a defined region, in particular in the zone of said fixed supports (31, 51) in a positive manner, in all other zones, however, by friction, in particular by means of clamping bars (27, 42).

9. Insulating system according to Claim 8, **characterised in that** a guiding tab (34, 53) is arranged on said cover (26, 39), by means of which said cover (26, 39) is held in a positive manner relative to said supporting rail (21, 41) and/or said clamping bars (27, 42), when seen along the longitudinal direction of said supporting rail (21, 41), whilst it is free to extend along the transverse direction relative to said supporting rail (21, 41).

10. Insulating system according to Claim 9, **characterised in that** said supporting rails (21) comprise a notch (33) into which said guiding tab (34) engages in a positive manner, or that said guiding tab (53) is held in a positive manner between two clamping bars (42).

## Revendications

1. Système d'isolation pour cheminées, à travers desquelles s'écoulent des gaz chauds, en particulier pour cheminées des gaz brûlées des turbines à gaz, comprenant une couche isolante (20, 40) ainsi qu'un recouvrement en nappe (26, 39) tenant ladite couche isolante (20, 40) en recouvrant la dernière contre le courant de gaz, dans lequel ledit recouvrement (26, 39) est guidé par et à travers des barres d'appui (21, 41), **caractérisé en ce que** lesdites barres d'appui (21, 41) sont aptes à être fixées moyennant un support fixe (31, 51) et au moins un support mobile (32, 52) à une paroi (25, 50) de la cheminée.

2. Système d'isolation selon la revendication 1, **caractérisé en ce que** lesdites barres d'appui (21, 41) sont fixées moyennant un support fixe central (31, 51) et au moins un support mobile (32, 52) des deux côtés dudit support fixe (31, 52) à ladite paroi (25, 50) de la cheminée.

3. Système d'isolation selon la revendication 1 or 2, **caractérisé en ce que** ledit support fixe (31, 51) pour ladite barre d'appui (21, 41) est formée par un écarteur (23, 48) relié, de manière fixe, en particulier soudé, à ladite barre d'appui (21, 41), d'un côté, et à ladite paroi (25, 50) de la cheminée, d'autre côté.

4. Système d'isolation selon une quelconque des revendications 1 à 3, **caractérisé en ce que** ledit support mobile (32, 52) est formé par un écarteur (22, 24; 47, 49) apte à être glissé relativement à ladite barre d'appui (21, 41).

5. Système d'isolation selon la revendication 4, **caractérisé en ce que** ledit écarteur (22, 24) se trouve en prise par une branche (35) dans une encoche (38) entre ladite barre d'appui (21) et un anneau (37) fixé le long de la direction longitudinale de ladite barre d'appui (21).

6. Système d'isolation selon la revendication 4, **caractérisé en ce que** ledit écarteur (22, 24) est relié, de manière fixe, à un anneau s'appuyant pour un déplacement glissant relativement à ladite barre d'appui (1).

7. Système d'isolation selon la revendication 4, **caractérisé en ce que** ledit écarteur (47, 49) se trouve en prise dans des encoches respectives (55) à ladite barre d'appui (41) par des oreilles respectives (56).

8. Système d'isolation selon une quelconque des revendications 1 à 7, **caractérisé en ce que** ledit recouvrement (26, 39) et lesdites barres d'appui (21, 41) sont reliés, l'un à l'autre, dans une zone définie, en particulier dans la zone desdits support fixes (31, 51) par engagement positif, dans toutes les autres zones, cependant, par adhérence, en particulier moyennant des barres de serrage (27, 42).

9. Système d'isolation selon la revendication 8, **caractérisé en ce qu'**une éclisse de guidage (34, 53) est disposée audit recouvrement (26, 39), moyennant duquel ledit recouvrement (26, 39) est tenu par engagement positif relativement à ladite barre d'appui (21, 41) et/ou auxdites barres de serrage (27, 42), vue le long de la direction longitudinale de ladite barre d'appui (21, 41), pendant qu'elle est libre à s'étendre le long de la direction transversale relativement à ladite barre d'appui (21, 41).

10. Système d'isolation selon la revendication 9, **caractérisé en ce que** lesdites barres d'appui (21) comprennent une entaille (33), dans laquelle se trouve en prise ladite éclisse de guidage (34) par engagement positif, ou **en ce que** ladite éclisse de guidage (53) est tenue, par engagement positif, entre deux barres de serrage (42).
